# EUROPEAN PATENT APPLICATION

(11) **EP 2 070 422 A1**
(43) Date of publication of application: **17.06.2009**
(21) Application number: 07023532.0
(22) Date of filing: 05.12.2007
(51) Int. Cl.: A23G 3/00, A23L 1/29, A61Q 11/00, A23G 3/54, A23G 3/36, A23G 3/38, A23G 3/34

(54) **Confectionery products promoting dental health**

(71) Applicant: Südzucker Aktiengesellschaft Mannheim/Ochsenfurt, 68165 Mannheim (DE); Henkel AG & Co. KGaA, 40589 Düsseldorf (DE)
(72) Inventor: Hausmanns, Stephan, 65185 Wiesbaden (DE); Dörr, Tillmann, 67591 Hohen-Sülzen (DE); Kowalczyk, Jörg, 67304 Eisenberg-Steinborn (DE); Kliss, Rainer, 64354 Reinheim (DE); Poth, Tilo, 69469 Weinheim (DE); Nfissi, Badr, 40223 Düsseldorf (DE); Schirlitz, André, 41470 Neuss (DE)
(74) Representative: Schrell, Andreas

(57) **Abstract**

The present invention relates to confectionery products comprising a tooth-friendly sweetener, a mixture of arginine bicarbonate and calcium carbonate and at least one product additive, processes to obtain them and various applications thereof.

## Description

The present invention relates to confectionery products comprising a tooth-friendly sweetener, a mixture of arginine bicarbonate and calcium carbonate and at least one product additive, processes to obtain them and various applications thereof.

In consideration of the increasing demand of customers for confectionery products, which do not only appeal because of their taste but also because of functional benefits, more and more innovative confectioneries are developed. Among them are in particular those, which provide some health effects to the consumer, such as sugar-free confectionery products, which are acariogenic and suitable for consumers suffering from diabetes. Sugar-free confectionery products of such a type are disclosed for instance in DE 195 32 395 C2 or DE 196 39 342 C2. Numerous further documents describe comestibles, in particular chewing gums and candies, which are prepared by sugarless constituents, such as sugar alcohols, and due to the absence of sucrose, provide some health effects.

Coated products, in particular confectionery, such as coated chewing gums or coated soft caramels, have been known for a long while. They are generally composed of a core, which may be a filled or non-filled chewing gum portion, and a one or multi-layered coating surrounding said core.

For instance, EP 0 664 674 B1 discloses a dual composition multi-layered hard coated chewing gum comprising a gum centre and an outer coating comprising xylitol and hydrogenated isomaltulose, also called isomalt. EP 0 314 739 B1 discloses improved hard coated sugarless chewing gums comprising a sugarless chewing gum centre and a sugarless hard coating comprising isomalt, wherein the gum centre has a low water content. EP 1 139 777 B1 discloses processes for coating comestibles with a syrup and a powder, both of them preferably being isomalt. US 4,238,510 and US 4,317,838 disclose sugarless coatings containing sorbitol being applied to chewing gum pieces and other confectionery. Thus, due to the use of sugar replacement agents, such as polyols, for instance isomalt, the prior art already provides tooth-friendly coated products.

However, although these products do not harm the health, in particular the health of teeth, it would be advantageous to provide confectionery, which even promotes the health of the consumer.

Products containing fluoride are known, which protect the teeth by making them resistant to acids, which erode the teeth and which are produced by bacteria present in the mouth of the consumer. However, fluoride consumed in excess may be toxic and may even harm the tooth enamel. Thus, its use in confectionery products is not advisable, since the quantity of such products consumed cannot be clearly limited as in drugs or oral care products, such as toothpaste.

EP 1 187 593 B1 discloses oral compositions comprising a guanidinium alkaline salt, a calcium salt and an orally acceptable carrier for the use in dental care products and food. WO 97/32565 discloses compositions containing arginine and calcium for treating dental caries. The specific products disclosed therein, however, are primarily medical products and not suitable to be consumed in larger amounts, such as confectionery products.

Thus, the present invention is based on the technical problem to provide confectionery products, which do not only provide a pleasant and attractive appearance and taste, but in addition promotes the health of the consumer, in particular the consumers' oral health, most preferably the health of consumers' teeth, even if consumed in large quantities.

The present invention solves this problem by the provision of the confectionery product, which comprises solely tooth-friendly ingredients, in particular tooth-friendly sweeteners and preferably tooth-friendly additives and in addition a mixture of arginine bicarbonate and calcium carbonate.

Thus, the present invention solves the above identified technical problem by providing a confectionery product, in particular a tooth-friendly confectionery product comprising a tooth-friendly sweetener and a mixture of arginine bicarbonate and calcium carbonate, optionally together with at least one product additive, which in a preferred embodiment is also tooth-friendly.

Such a mixture of arginine bicarbonate and calcium carbonate is preferably, according to the present invention, a mixture of these both substances or equivalents thereof, which comprise arginine bicarbonate and calcium carbonate or their equivalents in such an amount, that the confectionery product finally prepared comprises 1 to 25 weight-%, preferably 5 to 20 weight-% of arginine bicarbonate and 5 to 50 weight-%, preferably 10 to 40 weight-% calcium carbonate (each based on dry matter of confectionery product). Equivalents of arginine bicarbonate can for example be arginine carbonate, arginate hydroxide or arginine phosphate. Equivalents of calcium carbonate can for example be calcium fluoride, calcium monofluoro phosphate, sodium calcium pyrophosphate, calcium laurate, calcium bimetate, monocalcium phosphate, dicalcium phosphate or tricalcium phosphate.

In the context of the present invention, the term "arginine bicarbonate" refers to arginine bicarbonate itself and the above-mentioned equivalents, preferably arginine bicarbonate. In the context of the present invention, the term "calcium carbonate" refers to calcium carbonate itself and the equivalents mentioned above, preferably to calcium carbonate.

In the context of the present invention, the term "tooth-friendly" refers to a feature of a product or a sweetener according to which said sweetener or product is a non-tooth-decay promoting sweetener, i.e. in particular does not cause caries in the oral cavity of a human being. Particularly, a tooth-friendly sweetener or product is not or only in an insignificant amount degraded in the oral cavity, thus avoiding acid formation therein. In particular, a tooth-friendly sweetener or product is not available as substrate for the enzyme glycosyl transferase that cavity forming bacteria generate for the synthesis of insoluble glucan. Said feature can be identified and measured by an in vitro insoluble glucan synthesis activity inhibition assay, in which in the absence or presence of the substance to be tested a glycosyl transferase reaction is carried out in the presence of sucrose. Furthermore, tooth-friendly substances or products can be recognised by another in vitro assay, according to which cavity forming bacteria are tested for its production of acids from substrates to be tested. Tooth-friendly substances are not fermented by these bacteria, so that the tooth-friendly substance, according to the present invention, is recognised in such an assay as being not degraded to acids. Finally, tooth-friendly substances can be identified by in vivo assays for non-cariogenity, for instance in animals such as rats.

It has been surprisingly shown that tooth-friendly sweeteners can successfully be used and prepared together with a mixture of arginine bicarbonate and calcium carbonate in order to provide organoleptical, sensorical and optically superior confectionery products, which prevent health problems in the oral cavity, in particular dental caries, and which are suitable to calcify dental lesion and reduce dental sensitivity. In particular, the present compositions promote the formation of dentinal tubule plugs and therefore prevent and reduce dentin hypersensitivity, in particular treat or prevent pain-sensitivity of the teeth. The products of the present invention are suitable to strengthen and repair the tooth structure and to prevent or reduce plaque formation.

It is believed that due to the content of arginine bicarbonate and calcium carbonate in the products of the present invention, an alkaline environment is formed on the teeth of the consumer which neutralises harmful acids and both enhances remineralisation of the teeth and prevents tooth decay.

In a furthermore preferred embodiment the product comprises up to, i.e. at maximum 69 weight-%, preferably 0,1 to 69 weight-%, preferably 20 to 55 weight-%, of the at least one product additive.

In a preferred embodiment of the present invention, the tooth-friendly sweetener is a sugar alcohol, preferably a mono- or disaccharide alcohol.

In a preferred embodiment of the present invention, the tooth-friendly sweetener is selected from the group consisting of 1,1-GPS (1-O-α-D-glucopyranosyl-D-sorbitol), 1,1-GPM (1-O-α-D-glucopyranosyl-D-mannitol), 1,6-GPS (6-O-α-D-glucopyranosyl-D-sorbitol, isomalt and isomalt GS. In a further preferred embodiment, the tooth-friendly sweetener may be one or more of maltitol, maltitol syrup, lactitol and erythritol.

In the context of the present invention isomalt GS is a mixture of 1,6-GPS and 1,1-GPM in a ratio from 71 to 79% 1,6-GPS and 21 to 29% 1,1-GPM, preferably 75% 1,6-GPS to 25% 1,1-GPM. Isomalt is a mixture of 43 to 57% 1,6-GPS and 43 to 57% 1,1-GPM, preferably a 1:1 mixture (values given in weight-% on dry matter).

In a furthermore preferred embodiment of the present invention, the sugar alcohol used is a milled and agglomerated isomalt, in particular a milled and agglomerated isomalt, wherein the milled isomalt particles have a diameter less that 100 µm, preferably less than 50 µm. Preferably, such a milled and agglomerated isomalt is isomalt DC.

In a preferred embodiment of the present invention, the confectionery product comprises the at least one sugar-alcohol, in particular isomalt or isomalt GS or isomaltulose, in form of particles, wherein 90% of said particles have a diameter of less than 100 µm, preferably less than 50 µm.

Particle size as described herein is measured by scanning electron microscopy (SEM) or other optical or screening techniques, for example using a coulter counter.

In a preferred embodiment of the present invention, the tooth-friendly sweetener is a sugar.

In a preferred embodiment of the present invention, the tooth-friendly sugar is selected from the group consisting of isomaltulose, nutriose, leucrose and polydextrose. In a preferred embodiment, the sugar is isomaltulose.

In a further preferred embodiment, the amount of non-tooth-friendly ingredients is at maximum 1 weight-% (on dry matter of overall product).

In a preferred embodiment of the present invention, the confectionery product is sugar-free.

In a preferred embodiment of the present invention, the confectionery product is tooth-friendly.

In a furthermore preferred embodiment, it is evident that depending upon the specific nature of the confectionery product, product additives may be present in the confectionery product or its coating.

Depending upon the nature of the confectionery product, it comprises at maximum 69 weight-%, i.e. 0 to 69 weight-%, preferably 0,1 to 60 weight-%, preferably 10 to 55 weight-%, most preferably 1 to 40 weight-% of such product additives.

In the context of the present invention, a product additive is any substance which may be added into the preparation process to either influence the preparation process itself and/or influence product characteristics, which may either be relevant for the process or for the finally obtained product, for instance its organoleptic, sensoric, physiological, storage or optical behaviour.

In a preferred embodiment of the present invention, the product additive is selected from the group consisting of intense sweeteners, hydrocolloid, gum base, plastifiers, lubricant, emulsifiers, protein components, milk components, dairy ingredients, fat and fat substitutes, vegetable fat, vitamins, minerals, pharmaceutically active ingredients, preservatives, aroma, flavourings, such as peppermint, menthol, fruit, strawberry flavour, colours, TiO₂, edible acids, such as citric acid, and dietary fibres.

In a preferred embodiment of the present invention, the intense sweetener is selected from the group of cyclamate, saccharin, aspartame, glycyrrhicine, neohesperidine-dihydrochalcone, steveoside, thaumatin, monellin, acesulfame, alitame, sucralose or a mixture thereof.

In a preferred embodiment of the present invention, the product additive is selected from the group consisting of a) casein phosphopeptide-amorphous calcium phosphate (CPP-ACP), b) tetracalcium-phosphate/dicalciumphosphate, c) a two-phase system comprising a water soluble calcium compound and a water soluble inorganic phosphate in combination with at least one soluble fluorine compound, d) potassium salt, e) strontium salt, f) a combination of strontium and zinc ions, g) a modified enzyme comprising an enzyme and a polyanionic domain, h) bioactive glass particles having a particle size ≤ 25 µm, i) fluoride and j) a combination thereof.

Particularly preferred is that the confectionery product or, if the product is a coated product, in particular the coating thereof, comprises casein, a component of casein, a phosphoprotein, a phosphopeptide or a salt thereof, wherein said phosphoprotein or phosphopeptide comprises phosphoserine, phosphothreonine, phosphotyrosine, phosphohistidine or phospholysine. Preferably, the confectionery products or coatings thereof comprise casein phosphopeptides (CPP), in particular phosphoserin, preferably together with di- or trivalent metals such as CaCPP, FeCPP, ZnCPP, calcium phosphate CPP or calcium fluoride CPP.

In a particularly preferred embodiment the confectionery product of the present invention, in particular a chewing gum, hard or soft caramel, or if the product is coated, preferably the coating thereof comprises casein phosphopeptid-amorphous calcium phosphate (CPP-ACP) as a further substance to remineralise enamel subsurface lesions in teeth.

In a furthermore preferred embodiment, the present confectionery products or if coated, preferably the coating thereof, in particular chewing gums or hard caramels, comprise CPP-ACP and citric acid in addition to the other components contained therein.

In a furthermore preferred embodiment, the present invention relates to confectionery products, or in the case that the confectionery products are coated, preferably the coating thereof, which comprises a two-phase-system comprising as one phase at least one water-soluble calcium-compound and as another phase comprising at least one water-soluble inorganic phosphate and, optionally, at least one water-soluble fluorine compound, wherein, in a further preferred embodiment the water-soluble calcium salt may be calcium chloride or calcium nitrate.

In a furthermore preferred embodiment, the present invention relates to confectionery products, or in the case that the confectionery products are coated, preferably the coating thereof, comprising bioactive glass particles, in particular with a particle size of ≤ 25 µm, preferably **≤** 15 µm, in particular ≤ 10 µm.

In the context of the present invention, the term "bioactive glass" refers to an inorganic glass material having silicon oxide as its major component and which is capable of bonding with living tissue when reacted with physiological fluids, such as saliva. In particular, a bioactive glass in accordance with the present invention is a glass composition that will form a layer of hydroxycarbonate apatite in vitro when placed in a simulated body fluid. Preferably, a bioactive glass is biocompatible, i.e. does not trigger an overwhelmingly adverse immune response in the body, such as the oral cavity.

Bioactive glasses are described for example in "An Introduction to Bioceramics", Hench and Wilson, eds. World Scientific, New Jersey (1993).

The most preferred glass is a glass, which has a composition of 45% by weight silicon dioxide, 24,5% by weight sodium oxide, 6% by weight phosphorous oxide and 24,5% by weight calcium oxide.

In a furthermore preferred embodiment of the present invention, there is provided a confectionery product or, in case the confectionery product is a coated product, preferably the coating thereof, which comprises a nerve-desensitising agent selected from the group consisting of a potassium salt, a strontium salt, a combination of zinc or strontium ions and mixtures thereof. Preferably, said salts may be associated with a controlled dissolution composition, comprising at least one water-swellable or water soluble polymer.

In a furthermore preferred embodiment of the present invention, there are provided confectionery products, or in the case that the confectionery products are coated product, preferably coatings thereof, which comprise a modified enzyme comprising an enzyme and at least one polyanionic domain, for instance polyglutamic acid, polyaspartic acid or a polycarboxylic acid, wherein the enzyme comprises or is covalently attached to each of said polyanionic domain.

In a furthermore preferred embodiment of the present invention, there is provided a confectionery product, or in case the confectionery product is a coated product, preferably a coating thereof, which comprises a water-soluble calcium-phosphate salt, or a monolithic combination of calcium and phosphate salts in a first carrier and additionally an alkaline material and a fluoride ion source in a second carrier.

In a preferred embodiment of the present invention, a confectionery product is provided, or in case a confectionery product is a coated product, preferably a coating thereof, which comprises fluoride. In a particularly preferred embodiment, the confectionery product contains a therapeutically effective amount of fluoride, in particular 15 to 1800 ppm, preferably 10 to 1600 ppm.

In a furthermore preferred embodiment, the present invention provides confectionery products of the present invention, or if coated, preferably the coating thereof, in particular chewing gums, or soft or hard caramels, which comprise tetracalcium phosphate/dicalcium phosphate.

In a preferred embodiment of the present invention, the product is selected from the group of chewing gums, hard caramels, soft caramels, toffee, pastille, tablets, gum, jellies, marshmallows, nougat, lozenges, fudge, fondant or chocolate products.

In the context of the present invention, a tablet is a compressed product, i.e. a product prepared by mixing its ingredients in dry and powdered from and exerting pressure on said mixture to obtain a solid so-called compressed product.

In the context of the present invention, a hard candy and a soft candy is also called a hard caramel and a soft caramel.

In a preferred embodiment of the present invention, the confectionery product is a coated product.

In a preferred embodiment of the present invention, the coated product is a coated chewing gum, a coated toffee, a coated jelly, a coated tablet, a coated soft caramel or a coated chocolate product.

In a preferred embodiment of the present invention, the coated product comprises 15 to 70, preferably 25 to 45, weight-% product coating (based on dry weight of the overall coated product). Preferably, the coated product comprises 30 to 85, preferably 55 to 75 weight-% product core (based on the dry weight of the overall coated product).

In a particularly preferred embodiment, the product coating may comprise 1, 2 or more, for instance 50 to 100 layers of product coating material. In a particularly preferred embodiment, said layers may be of the same or different compositions.

In a preferred embodiment of the present invention, the mixture of arginine bicarbonate and calcium carbonate is contained in the coating of the coated product, preferably are solely contained therein.

A preferred embodiment of the present invention relates to a process for the preparation of a hard caramel mass, which comprises 25 to 94 weight-% of at least one tooth friendly sweetener, 1 to 25 weight-% arginine bicarbonate, 5 to 50 weight-% of calcium carbonate and 0 to 69 weight-% of at least one product additive, wherein the process comprises a) dissolving the sweetener in an aqueous medium, b) boiling the obtained solution to evaporate the aqueous medium, c) cooling the obtained mass, d) adding and distributing the at least one product additive to obtain a hard caramel mass, wherein the arginine bicarbonate and the calcium carbonate is added and homogenously distributed in the boiled sweetener at the end of step b) or in step c) or d). In the context of the present invention the end of step b) is reached once substantially all of the aqueous medium has been evaporated so as to leave a highly viscous hard caramel mass. Preferably, the aqueous medium is water.

In a preferred embodiment of the present invention, the boiling in step b) is done under vacuum.

A preferred embodiment of the present invention relates to a process for the preparation of a hard caramel mass, which comprises 25 to 94 weight-% of at least one tooth friendly sweetener, 1 to 25 weight-% arginine bicarbonate, 5 to 50 weight-% calcium carbonate and 0 to 69 weight-% of at least one product additive, wherein the process comprises a') melting the sweetener, b') cooling the obtained mass, c') adding and distributing the at least one product additive to obtain a hard caramel mass wherein the arginine bicarbonate and calcium carbonate are added and homogenously distributed in the sweetener in step a') or in step b') or c').

In a preferred embodiment of the present invention, the hard caramel mass as obtained according to the above boiling or melting process is shaped into a hard caramel.

A preferred embodiment of the present invention relates to a process for the preparation of coated confectionery products, which comprises a product core and a product coating, the coating comprising at least the coating ingredients at least a tooth-friendly sweetener, a mixture of arginine bicarbonate and calcium carbonate and the at least one product additive, preferably according to the above, which process comprises a) applying a coating medium comprising at least partially the coating ingredients to said product core, and b) drying the coated product, so as to obtain a product coating, which comprises 25 to 94 weight-% tooth-friendly sweetener, 1 to 25 weight-% arginine bicarbonate, 5 to 50 weight-% of calcium carbonate and 0 to 69 weight-% (each based on dry weight of product coating) of at least one product additive. If, in one preferred embodiment, only a part of the coating ingredients is added into the coating medium, then the other part is applied in a dusting or drying step thereafter.

In the context of the present invention, drying of the coated core with a dry and powdered ingredient is also called dusting.

Preferably, the coating medium is an aqueous medium, particularly water.

In a preferred embodiment of the present invention, the coating medium is a coating solution or coating suspension.

In a preferred embodiment of the present invention, after step a) and before step b) the coated products are subjected to a distribution step, wherein the coated products are agitated to allow a homogenous distribution of the coating medium on the product core.

In a preferred embodiment of the present invention, the drying of step b) is done by subjecting the coated product to air, in particular an air stream, having a temperature of 20°C to 80°C, preferably 30°C to 80°C.

In a preferred embodiment of the present invention, in step a) all coating ingredients are applied in form of a coating medium, in particular a coating suspension.

In a preferred embodiment of the present invention, steps a) and b) are repeated one or more times, preferably 8 to 120 times.

In a preferred embodiment of the present invention, the drying of step b) is done by adding part, preferably the overall amount of the bioactive glass particles of the coating ingredients in dry and powdered form to the coated products during step b). In this embodiment it is preferred to further add at least a part of the at least one sweetener in dry and powdered form to the coated product in step b), that means to use a mixture of the arginine bicarbonate and calcium carbonate and the tooth-friendly sweetener for dusting.

In a preferred embodiment of the present invention, a part of the coating ingredients, preferably the at least one sweetener and the at least one additive is applied in form of a coating medium in step a) and a further part, preferably the overall amount of the mixture of arginine bicarbonate and calcium carbonate, is applied in dry and powdered form, in step b).

In a most preferred embodiment of the present invention, all of the arginine bicarbonate and calcium carbonate of the product coating is added in dry and powdered form, preferably together with a part of the at least one tooth-friendly sweetener, preferably in step b).

In a preferred embodiment of the present invention, at least a part of the at least one tooth-friendly sweetener is added in dry and powdered form.

In a preferred embodiment of the present invention, the coating ingredients applied in powder form represent 30 to 75% by weight, preferably 40 to 75% by weight of the overall amount of the coating ingredients (each based on dry weight of the product coating).

In a preferred embodiment of the present invention, steps a) and b) are repeated 3 to 10 times.

In a preferred embodiment of the present invention, the method of the present invention is carried out in at least two phases, wherein in a first phase of the method, the coating medium with a part of the coating ingredient is applied in step a) and the drying is done in step b) by adding part of the coating ingredients in dry and powdered form, preferably all of the arginine bicarbonate and calcium carbonate, to the coated products one or more repeated times and wherein in a second phase of the method the coating medium is applied to the coated products without addition of dry and powdered coating ingredients one or more repeated times.

In a preferred embodiment of the present invention, the drying of step b) is done both by subjecting the coated product to air having a temperature of 20 to 80°C and by adding part of the coating ingredients in dry and powdered form to the coated products during step b).

In a preferred embodiment of the present invention, in a first phase of the repetitions of steps a) and b) the drying of step b) is done by adding part of the coating ingredients in dry and powdered form, preferably all of the arginine bicarbonate and calcium carbonate, to the coated products and wherein in a second phase of the repetitions only the coating medium is applied and the drying of step b) is done by subjecting the coated product to air having a temperature of 20 to 80°C.

In a preferred embodiment of the present invention, steps a) and b) are repeated 3 to 50 times.

The present invention also relates to a process for the preparation of compressed products comprising 25 to 94 weight-% of the tooth-friendly sweetener, 1 to 25 weight-% of arginine bicarbonate and 5 to 50 weight-% of calcium carbonate and 0 to 69 weight-% of at least one product additive, wherein said product ingredients are mixed and set under pressure, in particular in a suitable form, so as to obtain a compressed product, that means a tablet.

The present invention also relates to the use of or method of using arginine bicarbonate and calcium carbonate for the preparation of a confectionery product for preventing or reducing oral and dental defects, in particular by a calcium-transfer mechanism mediated by the presently used mixture. In a preferred embodiment of the present invention, said confectionery products are tooth-friendly confectionery products, in particular confectionery products comprising tooth-friendly sweeteners as defined herein.

The present invention relates to the use of or method of using arginine bicarbonate and calcium carbonate to prepare a confectionery product, in particularly a sensorically and organoleptically improved confectionery product, preferably a sugar-free confectionery product, comprising 1 to 25 weight-% of arginine bicarbonate and 5 to 50 weight-% of calcium carbonate and 0 to 69 weight-% of at least one product additive and 25 to 94 weight-% of a tooth-friendly sweetener for preventing or treating caries.

The present invention relates to the use of or method of using arginine bicarbonate and calcium carbonate to prepare a confectionery product, in particular a sensorically and organoleptically improved confectionery product, preferably a sugar-free confectionery product, comprising 1 to 25 weight-% arginine bicarbontate, 5 to 50 weight-% calcium carbonate and 0 to 69 weight-% of at least one product additive and 25 to 94 weight-% of a tooth-friendly sweetener for preventing or treating pain-sensitive teeth.

The present invention relates to the use of or method of using arginine bicarbonate and calcium carbonate to prepare a confectionery product, in particular a sensorically and organoleptically improved confectionery product, preferably a sugar-free confectionery product, comprising 1 to 25 weight-% of arginine bicarbonate, 5 to 50 weight-% of calcium carbonate and 0 to 69 weight-% of at least one product additive and 25 to 94 weight-% of a tooth-friendly sweetener for remineralisation of tooth-defects.

Further preferred embodiments of the present invention are the subject-matter of the subclaims.

The invention is illustrated by way of the following examples:

### Example 1 - tablets

### Recipe:

| | |
|---|---|
| isomalt DC 100 | 9,9 kg |
| arginine bicarbonate | 0,5 kg |
| calcium carbonate | 1,0 kg |
| acesulfam K | 15 g |
| citric acid | 30 g |
| aroma (strawberry) | 50 g |
| magnesium stereat | 50 g |

### Preparation:

The components were mixed and compressed in a rotary press.

| | |
|---|---|
| Tablet diameter: | 12 mm |
| Tablet weight | app. 600 mg |
| pressure force | 8-15 kN |
| hardness | 180-220 N |

Tablets were obtained with favourable organoleptic and sensoric properties, which provide caries and pain-sensitivity preventing and treating properties.

### Example 2 - Preparation of a hard caramel

### Recipe:

| | |
|---|---|
| isomalt ST | 23,0 kg |
| arginine bicarbonate | 0,5 kg |
| calcium carbonate | 2,2 kg |
| water | 8,5 kg |
| menthol | 0,1 kg |
| peppermint | 0,2 kg |
| acesulfam K | 25 g |

### Preparation:

Isomalt ST and water are mixed in a pan followed by heating to dissolve the isomalt and boiling this mixture at a temperature from 155 to 160°C. A 5 minute vacuum was applied so as to obtain a highly viscous caramel mass and after cooling of the mass to 110°C to 115°C the citric acid, the aroma, acesulfam K, arginine bicarbonate and calcium carbonate are added and are homogenously distributed. The so prepared hard caramel mass was moulded to form hard candies.

The above-identified recipe without water has also been processed directly to a hard caramel in a melt extrusion process by simultaneously extruding the ingredients and forming hard caramels therefrom.

In a continuously operating process, the mixture of arginine bicarbonate and calcium carbonate has been added after boiling of the isomalt ST-solution into the highly viscous, but still liquid hard caramel mass, which thereafter is transferred on a cooling belt and further processed by moulding and cooling in order to obtain the final hard caramels.

Hard caramels were obtained with favourable organoleptic and sensoric properties, which provide caries and pain-sensitivity preventing and treating properties.

### Example 3 - Chewing gum

### Recipe:

| | |
|---|---|
| chewing base Nostic TWA | 1400 g |
| isomalt ST | 2200 g |
| sorbitol syrup (70% dry substance) | 600 g |
| arginine bicarbonate | 400 g |
| calcium carbonate | 500 g |
| bioactive glass particles (≤ 15 µm) | 100 g |
| glycerol | 150 g |
| menthol | 150 g |
| flavour (spearmint) | 100 g |
| aspartam | 2,5 g |
| acesulfam K | 2,5 g |

### Preparation:

The chewing gum base is heated at approximately 55°C in a heating oven, before it is placed in a kneader; subsequently, the chewing gum base is kneaded for 1-2 minutes. During the kneading, the powdery additives (isomalt ST (1:1 mixture of 1,6-GPS and 1,1-GPM), arginine bicarbonate, calcium carbonate, the bioactive glass particles, sweetener, menthol) are gradually added in the indicated sequence; afterwards, flavour, sorbitol syrup and glycerol are added. The kneading continues until the mass is homogenous (end temperature approximately 45°C). The mass is taken from the kneader and divided into portions which weigh approximately 1 kg.

The chewing gum mass divided into portions is placed in intermediate storage for approximately 15 to 20 min on a talc-strewn substrate, extruded with a suitable extruder, and further processed as usual.

Chewing gums were obtained with favourable organoleptic and sensoric properties, which provide caries and pain-sensitivity preventing and treating properties.

### Example 4 - Preparation of a coated chewing gum

### A) Composition of the coated chewing gum:

### Center:

**table 1**

| Ingredient | Amount [% based on weight of center] |
|---|---|
| Glycerol | 1,78 |
| Water | 1,30 |
| Xylitol | 7,81 |
| Mannitol | 7,92 |
| Maltitol | 0,63 |
| Sorbitol | 44,40 |
| 1,1-Glucopyranosyl-mannitol (1,1-GPM) | 0,02 |
| 1,6-Glucopyranosyl-sorbitol (1,6-GPS) | 0,06 |
| Gum base | 36,08 |

### Coating:

**table 2**

| Ingredient | Amount [% based on dry weight of coating] |
|---|---|
| Isomalt GS (75 weight-% 1,6-GPS, 25 weight-% 1,1-GPM) | 90,00 |
| Gum arabic | 2,00 |
| arginine bicarbonate | 2,00 |
| calcium carbonate | 6,00 |

### B) Coating with a dry charged mixture of arginine bicarbonate and calcium carbonate

A coating solution comprising as coating ingredients 5500 g isomalt GS, 410 g of a 50% gum arabic solution (205 g gum arabic, dry matter) and 3980 g water was prepared. Chewing gum cushions with a weight of 1,018 g/pc are provided. In a coating drum, the coating solution is applied to the chewing gum cushions at 60°C, wherein during said coating a mixture of isomalt GS/PA (powder, 90% of the particles < 50 µm) and 0,1% SiO₂ is sequentially added as powdery dry charges in a first phase, in a second phase of 7 x 150 g and in a third phase of 4 x 170 g. The applied coating layers are dried after each cycle with a constant air stream with a temperature ranging from 23 to 28°C. Afterwards, the surface is dusted with the arginine bicarbonate and calcium carbonate in a fourth phase in 5 cycles, in a fifth phase in 5 cycles and in a sixth phase in 3 cycles. The applied coating layers are dried after each cycle with a constant air stream. Thus, in overall, a coated product is prepared comprising 33 weight-% coating and about 67 weight-% (each based on dry weight of final product) chewing gum centre.

A coated chewing gum was obtained with favourable organoleptic and sensoric properties, which provides caries and pain-sensitivity preventing and treating properties.

## Claims

1. A confectionery product comprising a tooth-friendly sweetener, a mixture of arginine bicarbonate and calcium carbonate and at least one product additive, wherein the confectionery product comprises 25 to 94 weight-% of the tooth-friendly sweetener, 1 to 25 weight-% of arginine bicarbonate, 5 to 50 weight-% calcium carbonate and 0 to 69 weight-% of the at least one product additive (each based on dry matter of confectionery product).

2. The confectionery product of claim 1, wherein the tooth-friendly sweetener is a sugar alcohol.

3. The confectionery product of claim 1, wherein the tooth-friendly sweetener is a sugar.

4. The confectionery product according to claim 1 or 2, wherein the tooth-friendly sweetener is selected from the group consisting of 1,1-GPS (1-O-a-D-glucopyranosyl-D-sorbitol), 1,1-GPM (1-O-α-D-glucopyranosyl-D-mannitol), 1,6-GPS (6-O-α-D-glucopyranosyl-D-sorbitol, isomalt, isomalt GS, maltitol, maltitol syrup, lactitol and erythritol.

5. The confectionery product according to claims 1 or 3, wherein the tooth-friendly sweetener is selected from the group consisting of isomaltulose, nutriose, leucrose and polydextrose.

6. The confectionery product according to any one of the above claims, wherein the confectionery product is sugar-free.

7. The confectionery product according to any one of the preceding claims, wherein the confectionery product is tooth-friendly.

8. The confectionery product according to any one of the preceding claims, wherein the product is selected from the group of chewing gums, hard caramels, soft caramels, toffee, pastille, tablets, gum, jellies, marshmallows, nougat, lozenges, fudge, fondant or chocolate products.

9. The confectionery product according to any one of the preceding claims, wherein the confectionery product is a coated product.

10. The confectionery product according to any one of the preceding claims, wherein the coated product is a coated chewing gum, a coated jelly, a coated tablet, a coated soft-caramel or a coated chocolate product.

11. The confectionery product according to any one of the above claims, wherein the product additive is selected from the group consisting of intense sweeteners, hydrocolloid, gum base, plastifiers, emulsifyers, protein components, milk components, dairy ingredients, fat and fat substitutes, vegetable fat, vitamins, minerals, pharmaceutically active ingredients, preservatives, aroma, flavourings, such as peppermint, menthol, fruit, strawberry flavour, colours, TiO₂, edible acids, such as citric acid, and dietary fibres.

12. The confectionery product according to any one of the preceding claims, wherein the intense sweetener is selected from the group of cyclamate, saccharin, aspartame, glycyrrhicine, neohesperidine-dihydrochalcone, steveoside, thaumatin, monellin, acesulfame, alitame, sucralose or a mixture thereof.

13. The confectionery product according to any one of the preceding claims, wherein the product additive is selected from the group of a) casein phosphopeptide-amorphous calcium phosphate (CPP-ACP), b) tetracalciumphosphate/dicalciumphosphate, c) a two-phase system comprising a water soluble calcium compound and a water soluble inorganic phosphate in combination with at least one soluble fluorine compound, d) potassium salt, e) strontium salt, f) a combination of strontium and zinc ions, g) a modified enzyme comprising an enzyme and a polyanionic domain, h) bioactive glass particles having a particle size ≤ 25 µm, i) fluoride and j) a combination thereof.

14. The confectionery product according to any one of the preceding claims, wherein the bioactive glass particles comprise from 40 to 90 weight-% SiO₂ (silicon dioxide), 4 to 50 weight-% CaO (calcium oxide), 1 to 15% P₂O₅ (phosphorus oxide) and 0 to 35 Na₂O (sodium oxide).

15. The confectionery product according to any one of the preceding claims, wherein the product additive is fluoride.

16. The confectionery product according to any one of the preceding claims, wherein the mixture of arginine bicarbonate and calcium carbonate is contained in the coating of the coated product, preferably solely contained in the coating.

17. A process for the preparation of a hard caramel mass comprising 25 to 94 weight-% of at least one tooth friendly sweetener, 1 to 25 weight-% of arginine bicarbonate, 5 to 50 weight-% of calcium carbonate and 0 to 69 weight-% of at least one product additive, wherein the process comprises a) dissolving the sweetener in an aqueous medium, b) boiling the obtained solution to evaporate the aqueous medium, c) cooling the obtained mass, d) adding and distributing the at least one product additive to obtain a hard caramel mass, wherein the arginine bicarbonate and calcium carbonate is added and homogenously distributed in the boiled sweetener at the end of step b) or in step c) or d).

18. A process for the preparation of a hard caramel mass, wherein the boiling in step b) is done under vacuum.

19. A process for the preparation of a hard caramel mass comprising 25 to 94 weight-% of at least one tooth friendly sweetener, 1 to 25 weight-% arginine bicarbonate, 5 to 50 weight-% calcium carbonate and 0 to 69 weight-% of at least one product additive, wherein the process comprises a') melting the sweetener, b') cooling the obtained hard caramel mass, c') adding and distributing the at least one product additive to obtain a hard caramel mass, wherein the arginine bicarbonate and calcium carbonate is added and homogenously distributed in step a'), b') or c').

20. A process for the preparation of a hard caramel mass according to any one of claims 17 to 19, wherein the hard caramel mass of any one of claims 17 to 19 is shaped to a hard caramel.

21. A process for the preparation of a coated confectionery product comprising a product core and a product coating, the coating comprising at least the coating ingredients at least a tooth-friendly sweetener, arginine bicarbonate and calcium carbonate and at least one product additive, preferably according to claims 1 to 16, which comprises a) applying a coating medium comprising at least partially the coating ingredients to said product core, and b) drying the coated product, so as to obtain a product coating, which comprises 25 to 94 weight-% tooth-friendly sweetener, 1 to 25 weight-% arginine bicarbonate, 5 to 50 weight-% calcium carbonate and 0 to 69 weight-% (each based on dry weight of product coating) of at least one product additive.

22. The process of claim 21, wherein the drying of step b) is done by subjecting the coated product to air, in particular an air stream, having a temperature of 20°C to 80°C, preferably 30°C to 80°C.

23. The process of claim 21 or 22, wherein the drying of step b) is done by adding at least a part of the coating ingredients in dry and powdered form to the coated products during step b).

24. The process of claims 21 to 23, wherein the coating medium is a coating solution or coating suspension.

25. The process according to claims 21 to 24, wherein after step a) and before step b) the coated products are subjected to a distribution step, wherein the coated products are agitated to allow a homogenous distribution of the coating medium on the product core.

26. The process according to any one of claims 21, 22, 24 and 25, wherein in step a) all coating ingredients are applied in form of a coating medium, in particular a coating suspension.

27. The process according to any one of claims 21 to 25, wherein a part of the coating ingredients is applied in the coating medium and a further part is applied in dry and powdered form, both of them in step a).

28. The process according to any one of claims 21 to 25 and 27, wherein all of the arginine bicarbonate and calcium carbonate of the product coating is added in dry and powdered form in step b).

29. The process according to any one of claims 21 to 25 and 27, wherein all of the arginine bicarbonate and calcium carbonate of the product coating is added in dry and powdered form and part of the at least one tooth-friendly sweetener is added in dry and powdered form, both of them in step b).

30. The process according to any one of claims 21 to 25 or 27 to 28, wherein at least a part of the at least one tooth-friendly sweetener is added in dry and powdered forming step b).

31. The process of any one of claims 21 to 30, wherein steps a) and b) are repeated one or more times, preferably 8 to 120 times.

32. The process according to any one of claims 21 to 30, wherein steps a) and b) are repeated 3 to 10 times.

33. The process according to any one of claims 21 to 25 and 27 to 32, wherein the coating ingredients applied in powder form represent 30 to 75% by weight, preferably 40 to 75% by weight of the overall amount of the coating ingredients (each based on dry weight of the product coating).

34. The process according to any one of claims 21 to 25 and 27 to 33, wherein the method is carried out in at least two phases, wherein in a first phase of the process, the coating medium comprising a part of the coating ingredients is applied in step a) and the drying is done in step b) by adding part of the coating ingredients in dry and powdered form to the coated products one or more repeated times and wherein in a second phase of the process the coating medium is applied to the coated products in step a) and dried in step b) by subjecting the coated product to air without addition of dry and powdered coating ingredients one or several times.

35. The process according to any one of claims 21 to 25 and 27 to 34, wherein the drying of step b) is done both by subjecting the coated product to air having a temperature of 20 to 80°C and by adding part of the coating ingredients in dry and powdered form to the coated products during step b).

36. The method according to claim 35, wherein steps a) and b) are repeated 3 to 50 times.

37. The method according to claim 36, wherein in a first phase of the repetitions of steps a) and b) the drying of step b) is done by adding part of the coating ingredients in dry and powdered form to the coated products and wherein in a second phase of the repetitions only the coating medium is applied and the drying of step b) is done by subjecting the coated product to air having a temperature of 20 to 80°C.

38. A confectionery product for preventing or treating caries in an animal or human being, which comprises 25 to 94 weight-% of at least one tooth-friendly sweetener, 1 to 25 weight-% arginine bicarbonate, 5 to 50 weight-% calcium carbonate and 0 to 69 weight-% of at least one product additive.

39. A confectionery product for preventing or treating pain-sensitive teeth in an animal or human being, which comprises 25 to 94 weight-% of at least one tooth-friendly sweetener, 1 to 25 weight-% arginine bicarbonate, 5 to 50 weight-% of calcium carbonate and 0 to 69 weight-% of at least one product additive.

40. A confectionery product for the remineralisation of tooth-defects in an animal or human being, which comprises 25 to 94 weight-% of at least one tooth-friendly sweetener, 1 to 25 weight-% arginine bicarbonate, 5 to 50 weight-% of calcium carbonate and 0 to 69 weight-% of at least one product additive.
